(19) Europäisches Patentamt

European Patent Office

Office européen des brevets

(11) EP 0 607 589 B1

## (12) EUROPEAN PATENT SPECIFICATION

(45) Date of publication and mention
of the grant of the patent:
**03.09.1997 Bulletin 1997/36**

(51) Int Cl.⁶: **E05F 11/48**

(21) Application number: **93120459.8**

(22) Date of filing: **17.12.1993**

(54) **Vehicle cable-operated window regulating device**

Mit einem Kabel betätigte Fahrzeugfesterhebervorrichtung

Dispositif lève-glace de véhicule actionné par câble

(84) Designated Contracting States:
**DE ES FR GB IT NL SE**

(30) Priority: **22.01.1993 IT TO930035**

(43) Date of publication of application:
**27.07.1994 Bulletin 1994/30**

(73) Proprietor: **ROLTRA MORSE S.p.A.**
**I-10090 Cascine Vica - Rivoli (IT)**

(72) Inventors:
• **Fogarollo, Pier Paolo**
**I-16043 Chiavari (IT)**

• **Bergesio, Giuseppe**
**I-12042 Bra (IT)**

(74) Representative: **Jorio, Paolo, Dr. Ing. et al**
**Studio Torta S.r.l.,**
**Via Viotti, 9**
**10121 Torino (IT)**

(56) References cited:
**EP-A- 0 208 603**          **DE-A- 2 750 904**
**DE-C- 3 737 733**          **FR-A- 2 441 711**

**Description**

The present invention relates to a vehicle cable-operated window regulating device.

In particular, the present invention relates to a window regulating device of the type comprising a guide; a slide running along the guide, connected to a movable window, and movable with the window along the guide; and a slide drive device; the drive device comprising a cable connected to the slide and extending along at least part of an annular path; an actuator unit connected to the cable for moving it axially along said path; and at least one sheath portion for guiding a corresponding portion of the cable and extending between a first and second fixed point along said path.

A drawback of known window regulating devices of the aforementioned type is that, after a certain number of operating cycles, the cable tends to slacken, thus resulting in serious vibration and possible withdrawal of the cable from the actuating unit.

To overcome the above drawback, one known window regulating device of the aforementioned type - as described for example in German Patent n. 26 16 331 - presents a calibrated spring interposed between one point on the sheath portion and at least one of said two fixed points, for maintaining the sheath portion contacting the other fixed point.

Though they do provide for taking up gradual slack on the cable by simply increasing the path of the cable between said two fixed points, springs such as the one described above fail to eliminate the noise problem typically associated with such devices. Indeed, the variable forces exerted on the spring during operation of the device are such as to induce oscillation of the spring, which in turn results in varying tension of the cable and, hence, in a high degree of operating noise.

This problem has been solved to some extent by inserting between the spring and the relative fixed point a one-way, step-operated lock device for maintaining oscillation of the spring and, hence, the variation in the tension of the cable, within a relatively small range.

The lock device, such as the type described and illustrated in German Patents n. 27 50 904 and n. 37 37 733, normally comprises a serrated rack integral with the sheath portion; and at least one fixed catch element fitted, together with the spring, to at least a first of the two fixed points, and which, by virtue of the spring, gradually and positively engages the teeth on the rack for moving, in steps, the end of the sheath facing the first fixed point away from the latter, and so ensuring the desired tension of the cable varies by at most a relatively small given amount depending on the tooth spacing of the rack.

Despite successfully taking up the slack on the cable as it occurs, and maintaining the tension of the cable substantially constant, perfected window regulating devices of the aforementioned type fail to fully eliminate cable vibration, and consequently operating noise, caused by small, continual fluctuations in the tension of the cable within the range defined by the tooth spacing of the rack.

FR-A-2 441 711 dicloses a window regulating device having the features of the preamble of Claim 1 and comprising, in particular, a one-way friction lock element cooperating with a cable sheath, which can thereby be damaged or deformed.

It is an object of the present invention to provide a perfected window regulating device of the aforementioned type, designed to overcome the aforementioned drawbacks.

This object is achieved by a window regulating device according to Claim 1.

A number of non-limiting embodiments of the present invention will be described by way of example with reference to the accompanying drawings, in which:

Figure 1 shows a schematic side view of a preferred embodiment of the window regulating device according to the present invention;
Figures 2 and 3 show larger-scale sections of a detail in Figure 1 in two different operating positions;
Figure 4 shows a section along line IV-IV in Figure 2;
Figure 5 shows a section, with parts removed for clarity, along line V-V in Figure 4;
Figure 6 shows a larger-scale section, as in Figure 2, of a variation of the detail in Figures 2 to 5.

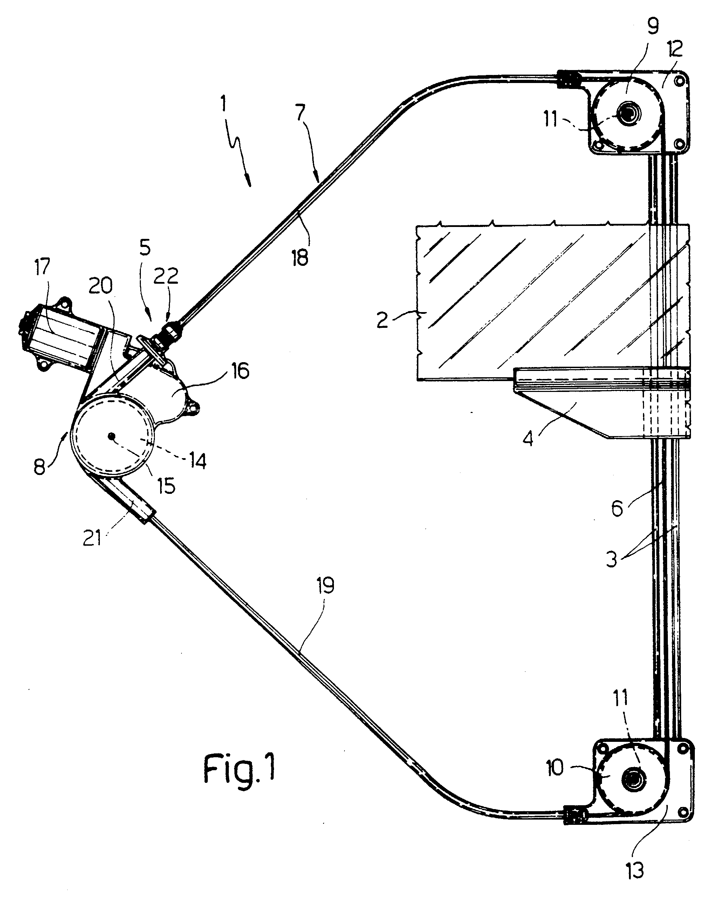

Number 1 in Figure 1 indicates a window regulating device for two-way regulation of a movable window 2 of a vehicle (not shown).

Device 1 comprises a vertical guide 3; and a slide 4 connected in sliding manner to guide 3 and supporting window 2. Slide 4 is movable both ways along guide 3 by a cable drive device 5 comprising a cable 6 connected to slide 4 and extending along an annular path 7 through slide 4; and an actuating unit 8 connected to cable 6 for moving it along path 7. Along path 7, cable 6 is looped about two transmission pulleys 9, 10 mounted, so as to rotate about respective axes 11, on respective supporting plates 12, 13 (integral, in use, with the vehicle) in turn fitted integral with the opposite axial ends of guide 3. Cable 6 is also looped about a drive drum 14 forming part of unit 8 and having an axis 15 substantially perpendicular to the Figure 1 plane.

Drum 14 is mounted for rotation on a supporting plate 16 (integral, in use, with the vehicle) and is connected by a known drive (not shown in Figure 1) to a motor 17 also fitted to plate 16 and forming part of unit 8. According to a variation not shown, in place of motor 17, actuating unit 8 comprises, in known manner, a hand-operated handle (not shown).

Between drum 14 and pulleys 9, 10, cable 6 runs inside respective flexible sheath portions 18, 19, and inside respective rigid, cylindrical, tubular bodies 20, 21, each extending on an extension of a respective sheath portion 18, 19, and adjacent and tangent to drum 14.

The end portions of sheath portion 19 are connected in known manner to body 21 and plate 13; while sheath portion 18 presents one end portion resting on plate 12, and the opposite end connected to body 20 by a unit 22 for tensioning cable 6.

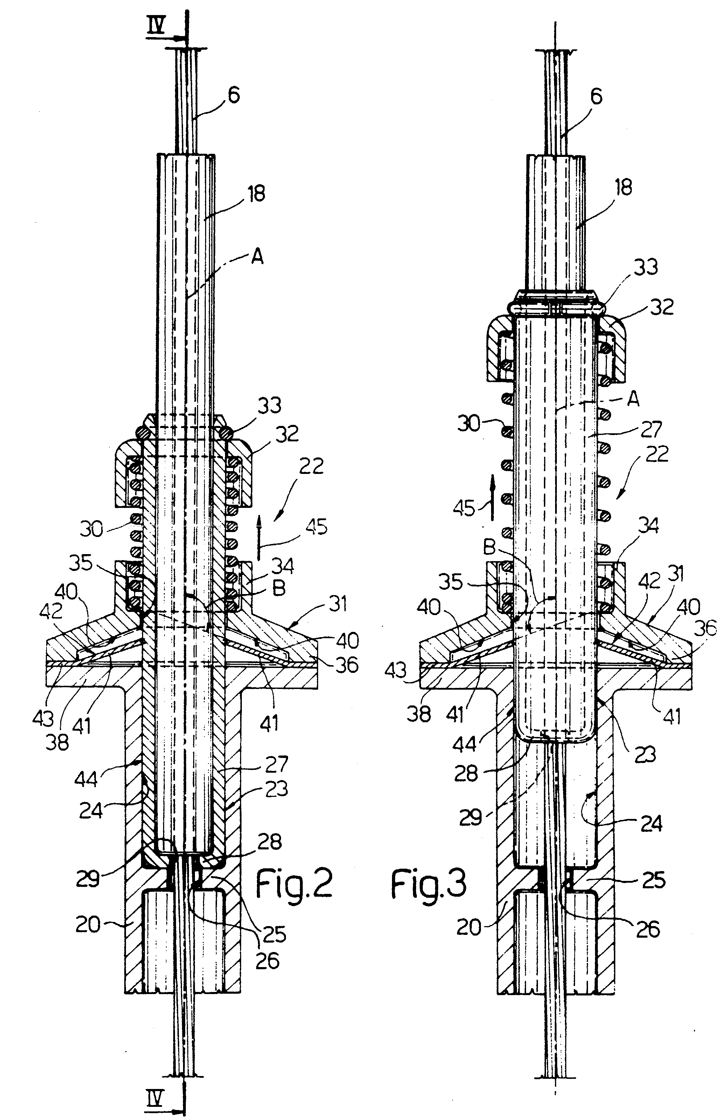

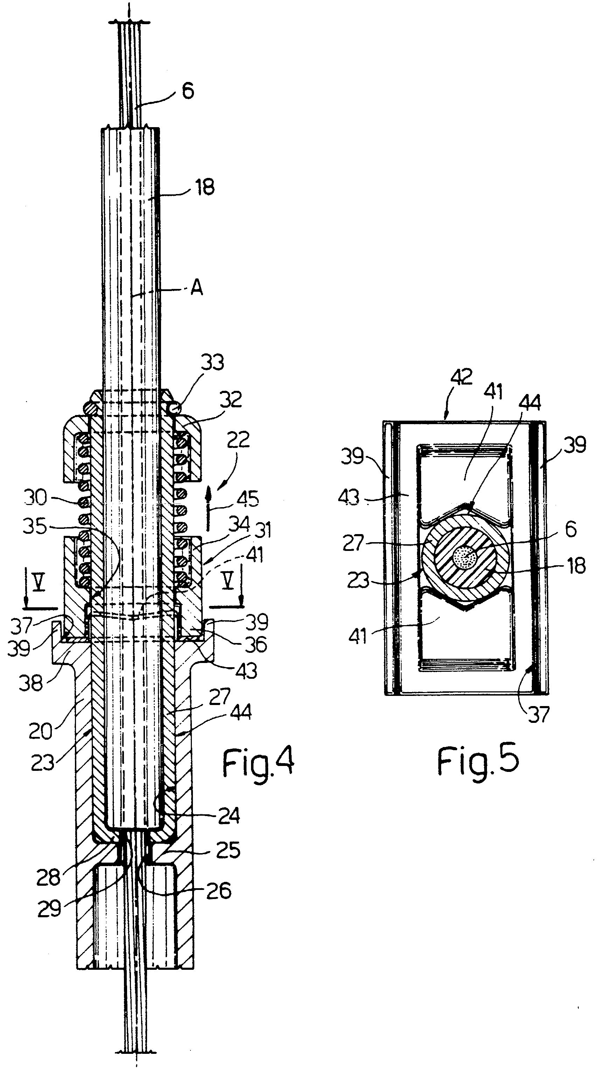

Unit 22 forms part of device 5 and, as shown particularly in Figures 2, 3 and 4, comprises a sleeve 23 fitted on to the end portion of sheath portion 18 adjacent to body 20, and defining a slider engaged in axially-sliding manner inside a guide element defined by a cylindrical seat 24 formed along an end portion of body 20 and defined axially by a partition wall 25 having a hole 26 engaged loosely by cable 6. As shown in Figure 2, sleeve 23 comprises a lateral wall 27, and a bottom wall 28 which, at least during initial operation of device 1, is positioned contacting partition wall 25, and presents a through hole 29 coaxial with hole 26 and engaged loosely by cable 6.

Unit 22 also comprises a helical spring 30 fitted on to the end portion of sleeve 23 projecting outwards of seat 24, and compressed between a fixed supporting body 31, integral with body 20, and a cup-shaped cap 32 secured axially to wall 27 by a retaining ring 33. The distance between cap 32 and supporting body 31 is so selected as to preload spring 30 in such a manner as to maintain a given contact pressure between sheath portion 18 and plate 12.

Again with reference to Figures 2, 3 and 4, body 31 is a hollow body terminating, on the side facing cap 32, with a cylindrical collar 34 housing a respective end portion of spring 30; and presents a hole 35 formed inside collar 34, coaxial with seat 24 and the axis A of sleeve 23, and fitted through with sleeve 23.

On the side facing body 20, body 31 terminates with a rectangular annular portion 36 engaged inside a respective rectangular seat 37 formed in a rectangular outer flange 38 of body 20 and defined by two parallel ribs 39 extending towards cap 32 from respective longer sides of flange 38. Body 31 cooperates with flange 38 and sleeve 23 so as to define two diametrically-opposed, substantially trapezoidal-section chambers 40, each housing a respective flexible blade 41 of a lock element 42 enabling continuous one-way movement of sleeve 23 into a variable extracted position wherein sleeve 23 withdraws at least partially from seat 24 so as to maintain substantially constant said contact pressure between plate 12 and sheath portion 18 and so maintain a constant tension of cable 6.

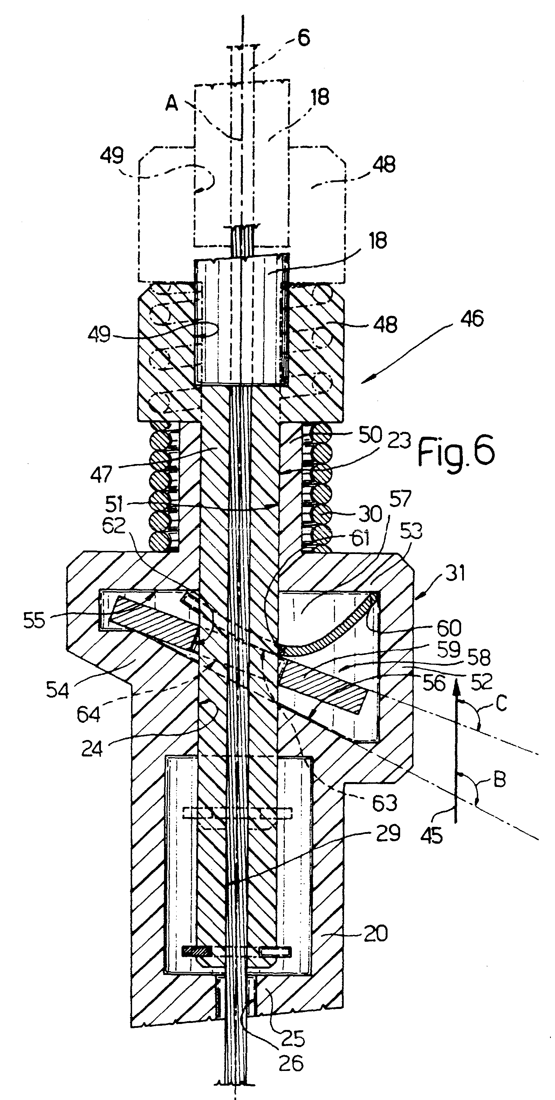

More specifically, and as shown in Figure 5, lock element 42 consists of a rectangular plate, the central portion of which is cut and bent to form the two blades 41, both bent on the same side of element 42, in opposite directions to each other, and with their free ends facing each other; and the peripheral portion 43 of which is gripped between portion 36 of body 31 and a corresponding part of flange 38. Each of blades 41 - one of which may be dispensed with - presents its free end contacting the outer lateral surface 44 of wall 27, and forms, with the traveling direction 45 of sleeve 23 towards plate 12 and parallel to axis A and wall 27, an angle B of more than 90° and less than 180°.

In actual use, any slack on cable 6 resulting in a reduction in pressure between plate 12 and sheath portion 18, and hence in the compression of spring 30, is immediately compensated, as it is formed, by a corresponding expansion of spring 30 which provides for moving sleeve 23 in direction 45 and so lengthening the path of cable 6 between plates 12 and 16.

As sleeve 23 moves in direction 45, surface 44 of the sleeve brushes against the free ends of blades 41 which, while freely permitting movement of sleeve 23 in the direction of plate 12, prevent it from oscillating about each new stable position, due to pulsating forces to which sleeve 23 is subjected by spring 30. Indeed, any displacement of sleeve 23 towards plate 16 is prevented by the free ends of blades 41 bracing against surface 44. In other words, any attempt by sleeve 23 to move in the direction of plate 16 is prevented by blades 41 exerting a wedge type locking action on surface 44, so that said pulsating forces, by virtue of only determining displacements of sleeve 23 which tend to increase the tension of cable 6, are damped almost instantly, thus preventing vibration. This favourable result, which is accompanied by a relatively high degree of noisefree operation of device 1, is also assisted by the fact that blades 41, when braced against surface 44, substantially define a Belleville washer capable of also damping any oscillation of sleeve 23 due to the elasticity of cable 6.

The Figure 6 variation relates to a tensioning unit 46 similar to unit 22, and the component parts of which corresponding to those of unit 22 are indicated using the same numbering system.

Unit 46 comprises a sleeve 23 in turn comprising a cylindrical body 47 having a cylindrical head 48 larger in diameter than body 47 and having a hole 49 coaxial with axis A and housing the end portion of sheath portion 18 adjacent to body 20. Sleeve 23 defines a slider engaged in axially-sliding manner inside a guide element defined by a cylindrical seat 24 formed along an end portion of body 20 and defined axially by a partition wall 25 having a hole 26 engaged loosely by cable 6. Sleeve 23 presents a through hole 29 coaxial with holes 26 and 49 and engaged loosely by cable 6.

Unit 46 also comprises a helical spring 30 compressed between head 48 and a fixed supporting body 31 integral with body 20, and wound about a tubular appendix 50 extending from body 31 coaxially with axis A and on the opposite side to body 20. Appendix 50 presents an axial hole 51 acting, together with seat 24, as a guide for body 47 of sleeve 23, and cooperates with head 48 to define an initial limit position of sleeve 23. The length of appendix 50 is such that, when sleeve 23 is in said initial limit position, the preload on spring 30 is sufficient to maintain a given contact pressure between sheath portion 18 and plate 12.

Again with reference to Figure 6, body 31 is a hollow body defined laterally by a cylindrical wall 52 coaxial with axis A and closed at one end by a wall 53 perpendicular to axis A and supporting appendix 50, and at the other end by a wall 54 slanting in relation to axis A and through which seat 24 is formed. Hole 51 extends through wall 53, which is defined, on the side facing wall 54, by a flat surface 55 perpendicular to axis A; while wall 54 forms the end wall of body 20, and is defined, on the side facing wall 53, by a flat surface 56 forming, with the traveling direction 45 of sleeve 23 towards plate 12 and parallel to axis A, an angle B of more than 90° and less than 180°.

Walls 52, 53 and 54 define a chamber 57 fitted through with body 47 of sleeve 23 and housing a lock element 58 enabling continuous one-way movement of sleeve 23 into a variable extracted position wherein sleeve 23 withdraws partially from body 20 for maintaining substantially constant said contact pressure between plate 12 and sheath portion 18 and so maintaining a constant tension of cable 6.

More specifically, and as shown in Figure 6, lock element 58 comprises a washer 59 of a given thickness "S" preferably roughly equal to the diameter of cable 6; and a curved elastic element 60, in particular a leaf spring element, the opposite ends of which rest on surface 55, and the intermediate portion of which is compressed against the surface of washer 59 facing surface 55, so as to push washer 59 elastically towards surface 56. More specifically, elastic element 60 presents a lateral opening 61 engaged in sliding manner by body 47 of sleeve 23, and is positioned contacting washer 59 and eccentrically in relation to axis A; while washer 59 presents a central cylindrical through hole 62 fitted through with body 47, and having a diameter "D" greater than diameter "d" of body 47 but less than a value:

$$D' = sinB (d + S/cosB)$$

at which washer 59 would be capable of tilting, in relation to cable 6 and by virtue of the eccentric thrust of elastic element 60, by an angle equal to angle B, and so adhering to surface 56. Conversely, for a diameter "D" of less than D' but in any case greater than "d", washer 59 is positioned (Figure 6) with a peripheral point contacting a point on surface 56 closest to surface 55, and with the opposite edges 63, 64 of hole 62 contacting the outer surface of body 47, so as to form, with body 47, an angle C smaller than angle B.

Consequently, any displacement of body 47 in direction 45 is permitted in that it tends to reduce the value of angle C against the action of elastic element 60 and, hence, the contact pressure between edges 63, 64 and the outer surface of body 47; whereas any displacement in the opposite direction to 45 - which would result in an increase in angle C - is prevented by edges 63 and 64 wedging against and so axially locking body 47 in said direction.

As can be seen, elastic element 60 of lock element 58 provides solely for maintaining washer 59 tilted in relation to body 47 of sleeve 23, the one-way lock function being performed entirely by washer 59.

## Claims

1. A vehicle window regulating device comprising a guide (3); a slide (4) running along the guide (3), connected to a movable window (2), and movable with the window (2) along the guide (3); and a cable drive device (5) for driving the slide (4); the drive device (5) comprising a cable (6) connected to the slide (4) and extending along at least part of an annular path (7); an actuating unit (8) connected to the cable (6) for moving it axially along said path (7); at least one sheath portion (18) covering a corresponding portion of the cable (6), the sheath portion (18) extending between a first (16) and a second (12) fixed point along said path (7); elastic means (30) interposed between the sheath portion (18) and the first fixed point (16), for achieving a given contact pressure between the sheath portion (18) and the second fixed point' (12); and continuous one-way lock means (22) (46) connected to said sheath portion (18) for maintaining said pressure equal at all times to said given value and effective to exclude substantially all movement of said sheath portion (18) towards said first fixed point (16); said lock means (22)(46) comprising a first element consisting of a guide body (20) associated with said first fixed point (16); a slider (23) fixed to the sheath (18) and movable along the guide body (20) in a given direction (45) towards the second fixed point (12); and a one-way lock element (42) (58) supported on said guide body (20), characterised in that said slider (23) comprises a surface (44) contacted by said one-way lock element (42)(58), such that a frictional force results which causes substantially all movement of said sheath portion (18) towards said first fixed point (16) to be excluded.

2. A device as claimed in Claim 1, characterized in that the lock element (42)(58) is designed to exert on said slider (23) a wedge type locking action for each displacement of said slider (23) away from said second fixed point (12).

3. A device as claimed in Claim 1 or 2, characterized by the fact that the lock element (42) comprises substantially cup-shaped elastic means (41) supported in a fixed position on said guide body (20), and engaged frictionally by said slider (23).

4. A device as claimed in Claim 3, characterized by the fact that said surface (44) of said slider is movable in contact with said cup-shaped elastic means (41) and substantially parallel to said direction (45); the cup-shaped elastic means (41) being inclined in relation to said direction (45) and towards said surface (44) and said second fixed point (12).

5. A device as claimed in Claim 4, characterized by the fact that the lock element (42) comprises at least one flexible blade (41) having a free end contacting said surface (44), and forming, with said direction (45), an angle of over 90°.

6. A device as claimed in Claim 5, characterized by the fact that said lock element (42) comprises a pair of said flexible blades (41) inclined towards each other and with their free ends facing each other; the slider (23) being mounted so as to slide frictionally between said two free ends.

7. A device as claimed in Claim 1, characterized by the fact that the lock element (58) is movable in relation to said guide body (20), and mates frictionally with said slider (23).

8. A device as claimed in Claim 7, characterized by the fact that the lock element (58) comprises plate means (59) fitted through with said slider (23) and movable, in relation to said guide body (20) and said slider (23), to and from a position wherein the slider (23) is locked frictionally one way.

9. A device as claimed in Claim 8, characterized by the fact that thrust means (60) are provided for pushing said plate means (59) into said lock position.

10. A device as claimed in Claim 8 or 9, characterized by the fact that thrust means (60) and reaction means (56) are provided for torquing said plate means (59) into said lock position.

11. A device as claimed in one of Claims 8 to 10, characterized by the fact that, in said lock position, said plate means (59) are positioned obliquely in relation to said slider (23).

12. A device as claimed in Claim 11, characterized by the fact that said plate means (59) present a through hole (62) engaged by said slider (23), said surface (44) of said slider (23) being movable through said hole (62) and substantially parallel to said direction (45); said hole (62) presenting a section larger than that of said slider (23), and end edges (63, 64) frictionally wedging against said surface (44) when said plate means (59) are in said oblique position.

13. A device as claimed in any one of the foregoing Claims from 8 to 12, characterized by the fact that said plate means (59) comprise a washer (59) fitted through with said slider (23).

**Patentansprüche**

1. Fahrzeug-Fensterhebervorrichtung mit einer Führung (3), einem Schlitten (4), der entlang der Führung (3) läuft, mit einem bewegbaren Fenster (2) verbunden ist und zusammen mit dem Fenster (2) entlang der Führung (3) bewegbar ist, und einer Seilantriebsvorrichtung (5) zum Antreiben des Schlittens (4), wobei die Antriebsvorrichtung (5) ein Seil (6), das mit dem Schlitten (4) verbunden ist und sich wenigstens teilweise entlang eines ringförmigen Weges (7) erstreckt, eine Betätigungseinheit (8), die mit dem Seil (6) verbunden ist, um es axial entlang des Weges (7) zu bewegen, wenigstens einen Mantelteil (18), der einen entsprechenden Teil des Seils (6) bedeckt und der sich zwischen einem ersten (16) und einem zweiten (12) Fixpunkt entlang des Weges (7) erstreckt, eine Federeinrichtung (30), die zwischen den Mantelteil (18) und den ersten Fixpunkt (16) gelegt ist, um einen gegebenen Anpreßdruck zwischen dem Mantelteil (18) und dem zweiten Fixpunkt (12) herzustellen, und eine stufenlose Einweg-Verriegelungseinrichtung (22) (46) aufweist, die mit dem Mantelteil (18) verbunden ist, um den Druck immer gleich dem gegebenen Wert zu halten, und die Wirkung hat, im wesentlichen jede Bewegung des Mantelteils (18) in Richtung auf den ersten Fixpunkt (16) auszuschließen, wobei die Verriegelungseinrichtung (22) (46) ein erstes Element, das aus einem Führungskörper (20) besteht, der dem ersten Fixpunkt (16) zugeordnet ist, einen Schieber (23), der mit dem Mantel (18) verbunden und in einer gegebenen Richtung (45) entlang des Führungskörpers (20) auf den zweiten Fixpunkt (12) zu bewegbar ist, und ein Einweg-Verriegelungselement (42) (58) aufweist, das an dem Führungskörper (20) gestützt ist, dadurch gekennzeichnet, daß der Schieber (23) eine Oberfläche (44) aufweist, die von dem Einweg-Verriegelungselement (42) (58) berührt wird, so daß eine Reibungskraft resultiert, die bewirkt, daß im wesentlichen jede Bewegung des Mantelteils (18) auf den ersten Fixpunkt (16) zu ausgeschlossen wird.

2. Vorrichtung wie in Anspruch 1 beansprucht, dadurch gekennzeichnet, daß das Verriegelungselement (42) (58) so gestaltet ist, daß es für jede Verschiebung des Schiebers (23) von dem zweiten Fixpunkt (12) weg eine Keilverriegelungswirkung auf den Schieber (23) ausübt.

3. Vorrichtung wie in Anspruch 1 oder 2 beansprucht, dadurch gekennzeichnet, daß das Verriegelungselement (42) eine im wesentlichen tellerförmige Federeinrichtung (41) aufweist, die in einer festen Stellung an dem Führungskörper (20) gestützt ist und in einem Reibschluß mit dem Schieber (23) steht.

4. Vorrichtung wie in Anspruch 3 beansprucht, dadurch gekennzeichnet, daß die Oberfläche (44) des Schiebers die tellerförmige Federeinrichtung (41) berührend und im wesentlichen parallel zu der Richtung (45) bewegbar ist und daß die tellerförmige Federeinrichtung (41) in bezug auf die Richtung (45) und auf die Oberfläche (44) und den zweiten Fixpunkt (12) zu schräg steht.

5. Vorrichtung wie in Anspruch 4 beansprucht, dadurch gekennzeichnet, daß das Verriegelungselement (42) wenigstens ein biegsames Blatt (41) aufweist, das ein die Oberfläche (44) berührendes freies Ende hat und mit der Richtung (45) einen Winkel von über 90° bildet.

6. Vorrichtung wie in Anspruch 5 beansprucht, dadurch gekennzeichnet, daß das Verriegelungselement (42) ein Paar biegsame Blätter (41) aufweist, die schräg zueinander stehen und deren freie Enden einander gegenüberliegen, und daß der Schieber (23) so angebracht ist, daß er mit Reibung zwischen den beiden freien Enden verschiebbar ist.

7. Vorrichtung wie in Anspruch 1 beansprucht, dadurch gekennzeichnet, daß das Verriegelungselement (58) in bezug auf den Führungskörper (20) bewegbar ist und reibungsmäßig an den Schieber (23) angepaßt ist.

8. Vorrichtung wie in Anspruch 7 beansprucht, dadurch gekennzeichnet, daß das Verriegelungselement (58) eine Scheibeneinrichtung (59) aufweist, durch die der Schieber (23) gesteckt ist und die in bezug auf den Führungskörper (20) und den Schieber (23) in eine und aus einer Stellung bewegbar ist, in der der Schieber (23) durch Reibung in einer Richtung verriegelt ist.

9. Vorrichtung wie in Anspruch 8 beansprucht, dadurch gekennzeichnet, daß eine Schubeinrichtung (60) vorgesehen ist, um die Scheibeneinrichtung (59) in die Verriegelungsstellung zu drücken.

10. Vorrichtung wie in Anspruch 8 oder 9 beansprucht, dadurch gekennzeichnet, daß eine Schubeinrichtung (60) und eine Gegenwirkungseinrichtung (56) vorgesehen sind, um die Scheibeneinrichtung (59) in die Verriegelungsstellung zu drehen.

11. Vorrichtung wie in einem der Ansprüche 8 bis 10 beansprucht, dadurch gekennzeichnet, daß in der Verriegelungsstellung die Scheibeneinrichtung (59) in bezug auf den Schieber (23) schräg gestellt ist.

12. Vorrichtung wie in Anspruch 11 beansprucht, dadurch gekennzeichnet, daß die Scheibeneinrichtung (59) ein Durchgangsloch (62) aufweist, das mit dem Schieber (23) in Eingriff steht, wobei die Oberfläche (44) des Schiebers (23) durch das Loch (62) hindurch und im wesentlichen parallel zu der Richtung (45) bewegbar ist, und daß das Loch (62) einen größeren Querschnitt als der Schieber (23) hat und Randteile (63, 64) aufweist, die sich durch Reibung gegen die Oberfläche (44) verkeilen, wenn sich die Scheibeneinrichtung (59) in der schrägen Stellung befindet.

13. Vorrichtung wie in einem der vorhergehenden Ansprüche von 8 bis 12 beansprucht, dadurch gekennzeichnet, daß die Scheibeneinrichtung (59) eine Scheibe (59) aufweist, durch die der Schieber (23) gesteckt ist.

## Revendications

1. Dispositif de réglage de vitre de véhicule comprenant un guide (3); un coulisseau (4) se déplaçant le long du guide (3), raccordé à une vitre mobile (2), et susceptible de se déplacer avec la vitre (2) le long du guide (3); et un dispositif d'entraînement par câble (5) destiné à entraîner le coulisseau (4); le dispositif d'entraînement (5) comprenant un câble (6) raccordé au coulisseau (4) et s'étendant sur au moins une partie d'un trajet annulaire (7); une unité d'actionnement (8) raccordée au câble (6) en vue de déplacer ce dernier axialement le long dudit trajet (7); au moins une partie de gaine (18) recouvrant une partie correspondante du câble (6), la partie de gaine (18) s'étendant entre un premier (16) et un deuxième (12) point fixe le long dudit trajet (7); un moyen élastique (30) intercalé entre la partie de gaine (18) et le premier point fixe (16), en vue d'exercer une pression de contact donnée entre la partie de gaine (18) et le deuxième point fixe (12); et des moyens de blocage unidirectionnel continu (22)(46) raccordés à ladite partie de gaine (18) en vue de maintenir ladite pression égale, à tout moment, à ladite valeur donnée, et capables d'empêcher sensiblement tout mouvement de ladite partie de gaine (18) vers ledit premier point fixe (16); lesdits moyens de blocage (22)(46) comprenant un premier élément constitué par un corps de guidage (20) associé audit premier point fixe (16); une pièce coulissante (23) fixée à la gaine (18) et mobile le long du corps de guidage (20) dans une direction donnée (45) vers ledit deuxième point fixe (12); et un élément de blocage unidirectionnel (42)(58) supporté sur ledit corps de guidage (20), caractérisé par le fait que ladite pièce coulissante (23) comprend une surface (44) mise en prise par ledit élément de blocage unidirectionnel (42)(58), de sorte qu'il en résulte une force de frottement qui provoque sensiblement l'empêchement de tout mouvement de ladite partie de gaine (18) vers ledit premier point fixe (16).

2. Dispositif selon la revendication 1, caractérisé par le fait que l'élément de blocage (42)(58) est conçu pour exercer sur ladite pièce coulissante (23) une action de blocage du type coinçage pour chaque déplacement de ladite pièce coulissante (23) qui l'écarte dudit deuxième point fixe (12).

3. Dispositif selon la revendication 1 ou 2, caractérisé par le fait que l'élément de blocage (42) comprend des moyens élastiques sensiblement cupuliformes (41) supportés en position fixe sur ledit corps de guidage (20) et en contact de frottement avec ladite pièce coulissante (23).

4. Dispositif selon la revendication 3, caractérisé par le fait que ladite surface (44) de ladite pièce coulissante (49) est susceptible de se déplacer en contact avec lesdits moyens élastiques cupuliformes (41) et sensiblement parallèlement à ladite direction (45); les moyens élastiques cupuliformes (41) étant inclinés par rapport à ladite direction (45), vers ladite surface (44) et ledit deuxième point fixe (12).

5. Dispositif selon la revendication 4, caractérisé par le fait que l'élément de blocage (42) comprend au moins une lame flexible (41) qui présente une extrémité libre en contact avec ladite surface (44) et forme, avec ladite direction (45), un angle supérieur à 90°.

6. Dispositif selon la revendication 5, caractérisé par le fait que ledit élément de blocage (42) comprend une paire desdites lames flexibles (41) inclinées l'une vers l'autre et dont les extrémités libres sont tournées l'une vers l'autre; la pièce coulissante (23) étant montée de manière à glisser avec frottement entre lesdites deux extrémités libres.

7. Dispositif selon la revendication 1, caractérisé par le fait que l'élément de blocage (58) est mobile par rapport audit corps de guidage (20), et est en contact de frottement avec ladite pièce coulissante (23).

8. Dispositif selon la revendication 7, caractérisé par le fait que l'élément de blocage (58) comprend des moyens formant plaque (59) traversés par ladite pièce coulissante (23) et mobiles, par rapport audit corps de guidage (20) et à ladite pièce coulissante (23), vers et depuis une position dans laquelle la pièce coulissante (23) est bloquée dans un sens par friction.

9. Dispositif selon la revendication 8, caractérisé par le fait que des moyens de poussée (60) sont prévus pour repousser lesdits moyens formant plaque (59) vers ladite position bloquée.

10. Dispositif selon la revendication 8 ou 9, caractérisé par le fait que des moyens de poussée (60) et des moyens de réaction (56) sont prévus en vue d'exercer un couple rappelant lesdits moyens formant plaque (59) vers ladite position bloquée.

11. Dispositif selon l'une des revendications 8 à 10, caractérisé par le fait que, dans ladite position bloquée, lesdits moyens formant plaque (59) sont placés obliquement par rapport à ladite pièce coulissante (23).

12. Dispositif selon la revendication 11, caractérisé par le fait que lesdits moyens formant plaque (59) présentent un trou traversant (62) dans lequel pénètre ladite pièce coulissante (23), ladite surface (44) de ladite pièce coulissante (23) étant susceptible de se déplacer à travers ledit trou (62) et sensiblement parallèlement à ladite direction (45); ledit trou (62) présentant une section plus grande que celle de ladite pièce coulissante (23), et des bords extrémaux (63, 64) qui se coincent par friction contre ladite surface (44) lorsque lesdits moyens formant plaque (59) sont dans ladite position oblique.

13. Dispositif selon l'une quelconque des revendications précédentes 8 à 12, caractérisé par le fait que lesdits moyens formant plaque (59) comprennent une rondelle (59) traversée par ladite pièce coulissante (23).

Fig.1

Fig.2

Fig.3

Fig.4

Fig.5

Fig.6